# FASCICULE DE BREVET EUROPEEN

(11) **EP 3 182 550 B1**
(45) Date de publication et mention de la délivrance du brevet: **07.02.2024**
(21) Numéro de dépôt: 16201729.7
(22) Date de dépôt: 01.12.2016
(51) Int. Cl.: H02J 5/00, B60L 5/00, B60M 7/00, H01F 38/14, H02J 7/02, H02J 50/10, H02J 50/40, B60L 53/122, B60L 53/30, B60L 53/39, H02J 50/12

(54) **PROCEDE DE CHARGE SANS CONTACT DYNAMIQUE, ET SYSTEME CORRESPONDANT**
DYNAMISCHES KONTAKTLOSES LADEVERFAHREN, UND ENTSPRECHENDES SYSTEM
DYNAMIC CONTACTLESS CHARGING METHOD, AND CORRESPONDING SYSTEM

(30) Priorité: 14.12.2015 FR 1562289
(43) Date de publication de la demande: 21.06.2017
(73) Titulaire: Renault s.a.s, 92100 Boulogne Billancourt (FR)
(72) Inventeur: LOUDOT, Serge, 91190 VILLERS LE BACLE (FR); CAILLIEREZ, Antoine, 92150 SURESNES (FR)
(74) Mandataire: Renault Group

(56) Documents cités:
- US-A- 4 836 344
- US-A1- 2012 326 522
- US-A1- 2014 015 328
- US-A1- 2015 035 355
- US-A1- 2015 298 559

## Description

L'invention se rapporte aux domaines de l'automobile et de l'électricité. Plus précisément, elle concerne un procédé de charge sans contact d'une batterie d'un véhicule automobile, l'énergie électrique étant transférée par induction entre une bobine primaire disposée au sol et une bobine secondaire embarquée sur le véhicule et connectée à la batterie du véhicule.

Les procédés de charge sans contact permettent de charger un véhicule muni d'au moins une bobine secondaire, reliée à une batterie de traction au travers d'un étage de conversion, alors que le véhicule roule sur une route dont le sol est équipé de bobines primaires et de leurs onduleurs associés.

Ainsi, le document US4836344A décrit des chaussées pourvues de modules électriques aptes à transmettre de la puissance à des véhicules par couplage inductif. Le document US2015/035355A1 décrit un système et un procédé de transfert d'énergie électrique et le document US2012/326522A1 décrit un dispositif d'alimentation électrique sans fil. Le document US2015/298559A1 décrit un réseau de distribution pour de la charge sans fil dynamique, et le document US2014/015328A1 divulgue un procédé de fonctionnement d'un récepteur d'alimentation sans fil, avec une étape d'alignement du récepteur d'alimentation sans fil avec l'émetteur d'alimentation sans fil sur la base de l'indication d'une distance entre le premier élément inductif et le deuxième élément inductif.

Les solutions actuelles de charge sans contact lorsque le véhicule roule sont basées sur des boucles de très grande longueur, afin d'en simplifier la réalisation et de disposer d'un seul onduleur alimentant une grande longueur de route. Ces dispositifs conviennent particulièrement aux véhicules de grande longueur (par exemple bus, tramway) circulant sur des voies réservées car leur application à des véhicules routiers conventionnels présente l'inconvénient majeur d'imposer une voie dédiée pour la charge. En effet, ils présentent des pertes élevées dues aux grandes longueurs de boucles dont le champ rayonné peut échauffer les parties conductrices du véhicule, combinées aux pertes par effet Joule de la boucle primaire elle-même, et un rayonnement élevé en dehors du véhicule, pouvant présenter des risques pour la santé. Le principe de la petite boucle est donc préféré dans le cadre du développement de la charge sans contact pour les véhicules électriques de tourisme et utilitaires circulant sur des voies non dédiées uniquement à la charge sans contact. Ces contraintes exigent que le circuit primaire du système de charge sans contact puisse cohabiter avec tout type de véhicule routier, y compris ceux qui ne peuvent pas se recharger par induction. Une autre exigence porte sur le rayonnement magnétique qui doit rester circonscrit à un volume défini entre le dessous de caisse du véhicule et le sol afin de satisfaire aux gabarits d'émission de champ magnétique, ainsi que pour éviter d'exposer les parties métalliques du châssis au champ magnétique ce qui détériorerait fortement le rendement de la charge à cause des courants de Foucault induits dans ces parties métalliques. Une dernière exigence est que le système permette aussi bien la charge sans contact en dynamique qu'en statique. Pour répondre à ces exigences, les petites boucles doivent être alimentées uniquement lorsqu'un véhicule doté d'un système de recharge inductif est au-dessus et les boucles doivent être capables d'assurer un couplage dynamique suffisant entre les bobines primaires et secondaires pour garantir un rendement satisfaisant y compris sur autoroute à haute vitesse où les temps de passage, et donc d'alimentation au-dessus d'une boucle, peuvent être réduits jusqu'à environ 20 ms.

Si des systèmes de charge sans contact utilisant des petites boucles sont déjà connus, ils ne répondent pas encore aux exigences énoncées précédemment. Ainsi le système Serpentine^{®} identifie avec un capteur de position la boucle primaire au sol située sous le véhicule, ladite boucle primaire est alors connectée via un relais à l'alimentation. Ce système ne fonctionne qu'à faible vitesse, environ 20 km/h, et ne présente pas de régulation s'adaptant à la variation de couplage ce qui ne favorise pas le rendement.

De l'état de la technique antérieur, on connaît le document WO201201291A2 divulguant un procédé de charge sans contact, entre un émetteur au sol et un récepteur embarqué à bord d'un véhicule automobile et relié électriquement à la batterie d'alimentation électrique dudit véhicule, l'émetteur étant apte à détecter la présence du récepteur par envoi périodique d'un train d'impulsions à faible puissance pour en déduire la présence ou l'absence d'un récepteur pour la charge de ladite batterie. Ce moyen de détection du récepteur par l'émetteur nécessite l'analyse du train d'impulsions sur plusieurs périodes ce qui est adapté à la charge sans contact statique mais ne convient pas à la charge sans contact dynamique nécessitant de commuter les boucles primaires plus rapidement. Par ailleurs, ledit document divulgue également une étape de détection par l'émetteur de la pleine charge de ladite batterie conditionnant l'inactivation du récepteur en fin de charge. Cette détection de la fin de charge répond au besoin statique de la problématique d'une batterie pleine mais ne convient pas pour une charge sans contact dynamique où la puissance absorbée par le détecteur peut passer sous un seuil prédéfini à cause de l'éloignement sans que la batterie soit pleinement chargée.

Un des buts de l'invention est de remédier à au moins une partie des inconvénients de la technique antérieure en fournissant un procédé de charge sans contact pour les véhicules électriques de tourisme et utilitaires circulant sur des voies non dédiées uniquement à la charge sans contact.

A cette fin, l'invention propose un procédé de transfert de puissance d'un circuit primaire, comportant un onduleur et un circuit résonant incluant une bobine primaire, vers un circuit secondaire comportant une bobine secondaire, destiné à la charge sans contact d'une batterie électrique d'un véhicule automobile électrique ou hybride en mouvement, une puissance électrique étant transférée par induction entre ladite bobine primaire émettrice disposée dans un tronçon de route, et ladite bobine secondaire réceptrice embarquée sur ledit véhicule et connectée à ladite batterie, ladite bobine primaire appartenant à un réseau d'au moins deux bobines primaires successives disposées dans un tronçon de route, chaque bobine primaire étant reliée à l'onduleur associé du circuit résonnant l'incluant, et l'espacement entre deux bobines primaires étant inférieur à la demi-longueur d'une bobine primaire, ledit procédé comportant des étapes de :
- transfert de puissance entre ladite bobine primaire et le véhicule,
- transfert de puissance entre la bobine primaire suivante et le véhicule, caractérisé en ce que ledit procédé comporte en outre
- une étape de mise en court-circuit de la bobine primaire suivante , au moyen de l'onduleur (OND) associé,
- une étape de détection de dépassement d'un seuil d'intensité de courant induit ou de puissance dans la bobine primaire (BP) suivante, avant la transition entre ledit transfert de puissance incluant la bobine primaire et ledit transfert de puissance incluant la bobine primaire suivante.

Grâce à l'invention, la boucle mise en court-circuit sert de capteur de position du véhicule approchant sur le tronçon de route, permettant de se passer de moyen de communication entre la route et le véhicule.

Selon une caractéristique avantageuse, le procédé comporte une étape d'initialisation, à l'arrivée détectée dudit véhicule sur le tronçon de route, par alimentation de la première bobine primaire du tronçon de route. Cette étape d'initialisation est ainsi gérée de manière autonome par l'infrastructure du tronçon de route.

Selon une autre caractéristique avantageuse, le procédé comporte une séquence d'initialisation comportant des étapes de:
- mise en court-circuit de la première bobine primaire du tronçon de route,
- détection d'un flux induit traversant la première bobine primaire du tronçon de route supérieur à un seuil prédéterminé, ledit flux provenant du circuit secondaire,
- transfert de puissance par émission de ladite première bobine primaire du tronçon de route. Cette séquence d'initialisation constitue ainsi une alternative à l'étape d'initialisation précédemment décrite.

Selon une autre caractéristique avantageuse, chaque bobine primaire initialise son transfert de puissance avec une intensité efficace de valeur prédéterminée, ce qui permet une mise en oeuvre simple dudit procédé.

Selon une autre caractéristique avantageuse, chaque bobine primaire initialise son transfert de puissance avec une valeur efficace de son intensité fonction de la dernière valeur efficace de l'intensité du courant d'alimentation de la bobine primaire précédente. Cette alternative permet un lissage de la puissance transférée et une meilleure robustesse sur les niveaux de commutation d'une boucle primaire à l'autre.

Selon une autre caractéristique avantageuse, la transition entre ledit transfert de puissance incluant la bobine primaire et ledit transfert de puissance incluant la bobine primaire suivante est activée par dépassement d'un seuil d'intensité de courant induit prédéterminé adaptatif dans la bobine primaire suivante. Cette caractéristique garantit un rendement de transfert élevé et peut être appliquée pour compenser les défauts d'alignement entre bobine primaire et secondaire en charge statique.

Selon une autre caractéristique avantageuse, ledit seuil d'intensité de courant induit prédéterminé adaptatif est fonction de la valeur efficace de l'intensité du courant d'alimentation traversant la bobine primaire, ce qui favorise le lissage de la puissance transférée entre la bobine primaire et la bobine primaire suivante.

Selon une autre caractéristique avantageuse, la transition entre ledit transfert de puissance incluant la bobine primaire et ledit transfert de puissance incluant la bobine primaire suivante est activée par dépassement d'un seuil de puissance prédéterminé adaptatif dans la bobine primaire suivante. Cette utilisation du critère de puissance plutôt que celui de courant constitue une alternative de mise en oeuvre du procédé.

Selon une autre caractéristique avantageuse, la transition est suivie de l'arrêt d'alimentation de la bobine primaire, ce qui finalise le transfert de puissance par ladite bobine.

Selon une autre caractéristique avantageuse, le procédé comporte une étape d'arrêt dudit procédé de transfert de puissance, déclenchée par la détection d'une absence de flux induit dans une autre bobine primaire suivante pendant une durée continue supérieure à un seuil de temps prédéterminé. L'avantage de cette caractéristique est qu'elle permet la détection de bobine primaire hors-service sans requérir de composant matériel supplémentaire.

Selon une autre caractéristique avantageuse, le déclenchement de ladite étape d'arrêt sur une bobine primaire autre que la dernière du tronçon de route active la mise en court-circuit de bobines primaires situées en aval de la dernière bobine primaire ayant émis. Cette caractéristique permet la reprise du transfert de puissance après un arrêt anormal du transfert, le terme anormal qualifiant l'arrêt qui a lieu sur une bobine primaire qui n'est pas la dernière du tronçon de route.

L'invention concerne aussi un système de transfert de puissance comportant un système primaire intégré à un tronçon de route, ledit système primaire comportant :
- au moins deux bobines primaires successives avec un espacement entre deux bobines inférieur à la demi-longueur d'une bobine primaire,
- au moins un onduleur pilotant l'intensité pour chacune desdites bobines primaires, chaque bobine primaire étant reliée à un onduleur respectif,
- un bus d'alimentation continue alimentant en tension ledit au moins un onduleur,
- des moyens de mesure des intensités traversant lesdites bobines primaires, - une unité électronique de pilotage commandant ledit au moins un onduleur, ledit système primaire étant apte à transférer une puissance électrique par induction entre la première desdites bobines primaires et une bobine secondaire embarquée sur un véhicule automobile électrique ou hybride en mouvement et connectée à la batterie dudit véhicule, puis à transférer une puissance électrique par induction entre la bobine primaire suivante et ladite bobine secondaire, ledit système de transfert de puissance étant caractérisé en ce qu'il comporte en outre
- des moyens aptes à mettre en court-circuit la bobine primaire suivante lesdits moyens incluant l'onduleur respectif de ladite bobine primaire suivante,
- des moyens de détection de dépassement d'un seuil d'intensité de courant induit ou de puissance dans la bobine primaire suivante,
avant la transition entre le transfert de puissance incluant la première desdites bobines primaires et le transfert de puissance incluant la bobine primaire suivante.

Avantageusement, le système comporte :
- un moyen de détection de l'arrivée dudit véhicule sur le tronçon de route,
- un moyen d'initialisation du transfert de puissance comportant des moyens de pilotage du courant d'alimentation de la première bobine primaire du tronçon de route, activé par ledit moyen de détection.

Alternativement, le système comporte des moyens d'initialisation comportant des moyens de :
- mise en court-circuit de la première bobine primaire dudit tronçon de route,
- détection d'un dépassement de seuil de courant du fait d'un flux induit traversant la première bobine primaire dudit tronçon de route, ledit flux provenant de la bobine secondaire,
- pilotage en émission de ladite première bobine primaire du tronçon de route, lesdits moyens de pilotage étant activés par lesdits moyens de détection.

Selon une caractéristique avantageuse, le système comporte des moyens aptes à :
- détecter un arrêt du transfert de puissance non requis par ledit système primaire,
- déclencher la mise en court-circuit de bobines primaires situées en aval de la dernière bobine primaire ayant émis.

Selon une autre caractéristique avantageuse, le système comprend en outre des moyens de :
- réception d'un ordre de dégivrage émis par une unité électronique de pilotage,
- vérification de l'absence de transfert de puissance par ladite bobine primaire,
- vérification de l'absence de véhicule au-dessus de ladite bobine primaire,
- injection d'un courant efficace de dégivrage dans ladite bobine primaire.

Ce système présente des avantages analogues à ceux du procédé selon l'invention.

Avantageusement, l'invention concerne aussi un procédé de dégivrage d'un tronçon de route dans lequel est intégré ledit système de transfert de puissance, caractérisé en ce qu'il comprend des étapes de :
- réception d'un ordre de dégivrage émis par un moyen de pilotage d'une bobine primaire,
- vérification de l'absence de transfert de puissance par ladite bobine primaire,
- vérification de l'absence de véhicule au-dessus de ladite bobine primaire par mesure d'une variation d'impédance de ladite bobine primaire inférieure à un seuil prédéterminé,
- dégivrage par injection de courant efficace dans ladite bobine primaire. Ce procédé de dégivrage permet d'utiliser une bobine primaire comme moyen de dégivrage du tronçon de route de manière sécurisée en ne permettant l'activation du procédé de dégivrage qu'en l'absence de tout véhicule au-dessus de ladite bobine primaire.

Selon une caractéristique avantageuse, l'alimentation de la bobine primaire par ladite injection de courant efficace se fait à fréquence élevée, garantissant un meilleur échauffement.

Avantageusement, l'invention concerne aussi un procédé de gestion de la charge sans contact d'un véhicule roulant sur un tronçon de route équipé d'un système de transfert de puissance caractérisé en ce qu'il comprend une séquence d'initialisation comportant des étapes de :
- détection de l'arrivée dudit véhicule sur ledit tronçon de route équipé,
- activation en émission d'une bobine secondaire connectée à une batterie du véhicule pendant un temps prédéterminé ou jusqu'à ce qu'un flux soit induit dans ladite bobine secondaire. Cette séquence d'initialisation apporte une alternative à l'étape d'initialisation autonome par le système primaire.

Selon une autre caractéristique avantageuse, ledit procédé de gestion de la charge sans contact comprend une séquence de reprise de charge comportant des étapes de :
- détection de l'arrêt d'un transfert de puissance effectué par ledit système primaire dudit système de transfert de puissance, par l'absence prolongée de flux induit dans la bobine secondaire pendant une durée continue supérieure à un seuil de temps prédéterminé,
- vérification du caractère non requis dudit arrêt déterminé en ce que ledit arrêt ne résulte ni d'une volonté du conducteur du véhicule, ni d'une requête d'un système de contrôle de ladite batterie, ni d'une requête d'arrivée en fin dudit tronçon de route équipé,
- activation en émission de ladite bobine secondaire pendant un temps prédéterminé ou jusqu'à ce qu'un flux soit de nouveau induit dans ladite bobine secondaire.

D'autres caractéristiques et avantages apparaîtront à la lecture d'un mode de réalisation préféré décrit en référence aux figures dans lesquelles :
- la figure 1 est un schéma de principe d'une route électrique à transmission d'énergie par induction conforme à l'invention;
- la figure 2 représente un exemple selon l'invention d'un système de transfert de puissance entre une boucle au sol et un véhicule situé au-dessus;
- la figure 3 est un organigramme des étapes du procédé de transfert de puissance selon l'invention ;
- la figure 4 représente le couplage magnétique lorsque bobines émettrice et réceptrice sont en face ;
- la figure 5 représente le couplage magnétique lorsque bobine émettrice et réceptrice sont décalées ;
- la figure 6 représente le couplage magnétique une fois le changement de bobine émettrice effectué ;
- la figure 7 est un graphique comparant la puissance transmise avec et sans procédé de transfert de puissance par mise en court-circuit ;
- la figure 8 est un chronogramme de l'intensité crête dans les différentes bobines primaires au sol en fonction de l'avancement du véhicule ;
- la figure 9 est un organigramme des étapes du procédé en cas de bobine primaire défaillante ;
- et la figure 10 est un organigramme des étapes du procédé de dégivrage selon l'invention.

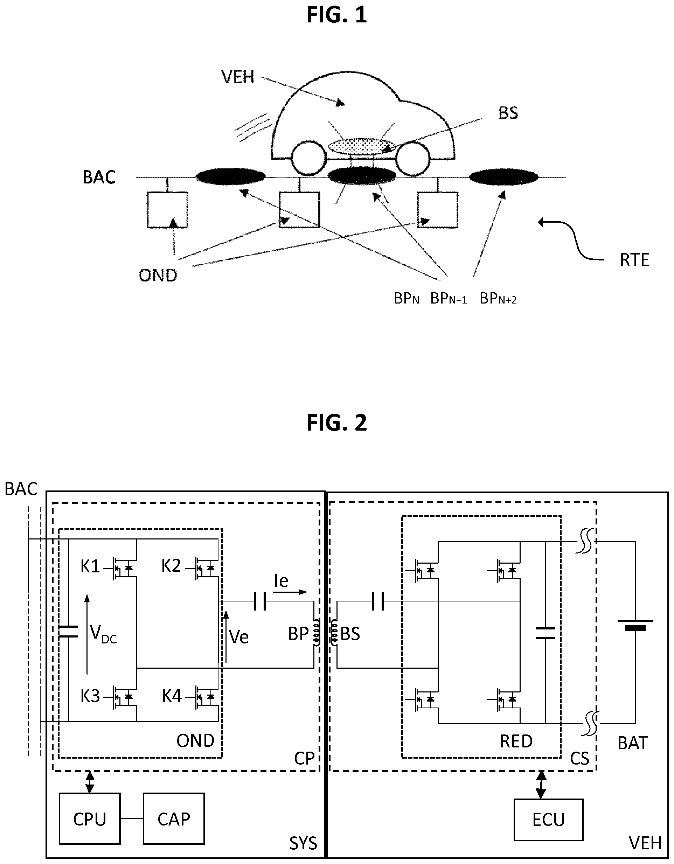

Sur la **figure 1** est représenté un schéma de principe d'une route électrique à transmission d'énergie par induction conforme à l'invention sur lequel sont illustrées des boucles ou bobines primaires BP intégrées au sol du tronçon de route RTE ainsi que leurs onduleurs OND associés. Les bobines primaires BP sont alimentées par un bus d'alimentation continue BAC intégré au sol. L'espacement entre deux boucles primaire BP est inférieur à la demi-longueur d'une boucle primaire BP. Un véhicule VEH électrique ou hybride en mouvement est situé au-dessus d'une bobine primaire BP et un transfert de puissance entre une bobine primaire BP et une bobine secondaire BS du véhicule VEH connectée à la batterie du véhicule VEH est illustré. En roulage autoroutier, le temps passé par le véhicule VEH au-dessus de la boucle primaire BP (dans la limite d'un décalage de +/-50%) peut être inférieur à 20 ms.

Selon un mode préféré de réalisation de l'invention, la **figure 2** illustre le système SYS de transfert de puissance entre une bobine au sol BP et un véhicule VEH situé au-dessus. Le système SYS comporte :
- une unité électronique de pilotage CPU contenant notamment des moyens de pilotage dudit onduleur OND,
- au moins un capteur de courant CAP, relié à ladite unité CPU, à laquelle ledit capteur fournit l'intensité du courant le,
- un circuit primaire CP au sol comportant l'onduleur OND et un circuit résonant primaire comportant la bobine primaire BP associée à un condensateur de compensation.

Pour des raisons de visualisation le système SYS illustré ici ne représente qu'un circuit primaire CP mais il faut considérer qu'il contient autant de circuits primaires BP qu'il y a de bobines primaires BP dans le tronçon de route RTE. Le système SYS comprend alors en fonction de l'architecture électrique-électronique retenue soit une unité électronique de pilotage CPU unique connectée à tous les onduleurs, comme dans un mode de réalisation décrit dans le document FR2998427B1, soit une multiplicité d'unités électroniques de pilotage CPU communiquant entre elles par un bus par exemple « CAN », de l'anglais : Control Area Network, attribuant à chaque unité électronique de pilotage CPU un identifiant.

A bord du véhicule VEH se trouvent :
- le circuit secondaire CS comportant un étage de redressement RED embarqué et un circuit résonant secondaire, à l'image de celui présent dans le circuit primaire BP, comportant une bobine secondaire BS,
- une batterie de traction BAT à laquelle est relié le circuit secondaire CS.

En émission, le circuit primaire CP est alimenté par un bus d'alimentation continue BAC intégré au sol. La tension V_{DC} est la tension d'alimentation aux bornes de l'onduleur OND. Les cellules de commutation K1, K2, K3 et K4 sont des transistors, type MOSFET ou IGBT dans l'exemple, dont le pilotage détermine la fréquence du circuit primaire CP. Ve est la tension du circuit résonant primaire et le est l'intensité traversant la bobine primaire BP. Les bobines ont ainsi trois états possibles : court-circuit, circuit ouvert ou alimentée. Quand la bobine primaire BP est en court-circuit soit les transistors hauts : K1 et K2 sont ouvertes alors que K3 et K4 sont fermés, soit les transistors bas : K3 et K4 sont ouverts alors que K1 et K2 sont fermés. L'unité électronique de pilotage CPU pilote lesdits transistors K1, K2, K3 et K4, reçoit des capteurs d'intensité CAP la valeur de l'intensité du courant le qu'il filtre et dont il calcule et mémorise au moins momentanément la valeur efficace, et communique également l'état desdits transistors K1, K2, K3 et K4 aux éventuelles autres unités électroniques de pilotage CPU du système SYS du tronçon de route RTE. Côté véhicule VEH, l'utilisation en émission (mode générateur) de ladite bobine secondaire BS requiert l'alimentation des transistors de l'étage de redressement RED par la batterie BAT sans aucun ajout matériel (hard), le pilotage se faisant par le logiciel (soft) intégré à l'unité de commande ECU dudit véhicule VEH. Ladite émission par la bobine secondaire BS est réalisée par impulsions de courant, par exemple d'intensité de 1 à 2 ampères pendant 1ms avec un rapport cyclique de 10 à 20% par exemple, ledit courant provenant de la batterie BAT. Un train desdites impulsions de 500 à 1000 oscillations de courant est alors initié. La première impulsion de courant générant un courant induit dans une bobine primaire BP constitue le signal de lancement de la séquence de charge sans contact déclenchant l'alimentation de ladite bobine primaire BP. Le courant induit dans la bobine secondaire BS force alors l'étage de redressement RED en mode roue libre, c'est-à-dire que le courant passe alors par les seules diodes de commutations, ce qui rend de facto la bobine secondaire BS de nouveau réceptrice, interrompant ainsi les appels de courant à la batterie BAT et donc lesdites impulsions de courant.

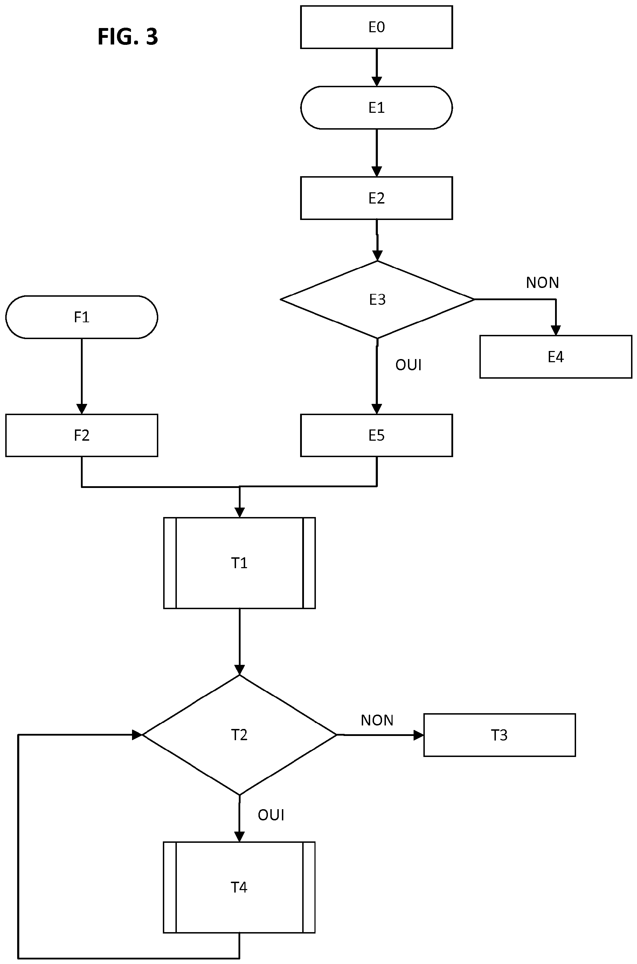

La **figure 3** est un organigramme des étapes du procédé de transfert de puissance selon l'invention explicitant l'enchaînement des étapes. L'initialisation du processus de transfert de puissance consiste en la détection de la première bobine primaire BP et peut être réalisée de deux manières différentes, la première manière d'initialiser le processus suit le séquencement suivant :
- E0 : état de repos de la première bobine primaire BP du tronçon de route RTE : court-circuit (par fermeture des transistors hauts : K1 et K2, ou bas : K3 et K4).
- E1 : Détection par le véhicule VEH de l'arrivée sur le tronçon de route RTE au moyen d'un système de détection de la position du véhicule (par exemple : système GPS acronyme anglais de « Global Positioning System ») ou par déclenchement conducteur via une interface homme-machine.
- E2 : Déclenchement de l'alimentation de la bobine secondaire BS avec émission d'impulsions de courant d'intensité de 1 à 2 ampères pendant 1ms avec un rapport cyclique de 10 à 20% par exemple, ledit courant provenant de la batterie BAT. Le train desdites impulsions envoyé comporte 500 à 1000 oscillations de courant, correspondant à une durée prédéterminée d'environ 5 à 10 millisecondes.
- E3 : Détection d'une intensité du courant induit supérieure à un seuil d'amorçage prédéterminé d'environ 1 ampère , ledit courant induit est détecté dans la première bobine primaire BP et il est induit par une des impulsions dudit train d'impulsions généré par la bobine secondaire BS alors émettrice, lorsque les deux bobines primaire BP et secondaire BS sont presque alignées. Ladite impulsion de courant induit ainsi détectée constitue le signal d'amorçage de la charge par induction.

Si à l'étape E3 de test, un courant induit supérieur audit seuil d'amorçage est détecté dans une bobine primaire BP, alors l'étape suivante est l'étape E5. Sinon l'étape suivante est E4.
- à l'étape E4, aucune bobine primaire proche fonctionnelle n'a détecté le véhicule VEH, qui par conséquente arrête l'alimentation à la fin du train d'impulsions, correspondant à une durée prédéterminée d'environ 10 millisecondes.
- l'étape E5 est le transfert de puissance par émission de la bobine primaire BP_{N} ayant détectée le véhicule VEH, forçant alors l'étage de redressement RED en mode roue libre, c'est-à-dire que le courant passe alors par les seules diodes de commutations, ce qui rend de facto la bobine secondaire BS de nouveau réceptrice, interrompant ainsi les appels de courant à la batterie BAT, et met en court-circuit la bobine primaire suivante BP_{N+1}.

Une autre façon d'initialiser le processus de transfert de puissance consiste en l'enchaînement des étapes suivantes :
- F1 : Détection par la première bobine primaire du tronçon de route RTE de l'arrivée d'un véhicule VEH (au moyen par exemple d'un portique à l'image des télépéages, utilisant le wifi ou autre).
- F2 : Alimentation de la première bobine primaire BP_{N} et mise de la (seconde) bobine primaire suivante: BP_{N+1} en court-circuit.

A l'issue de l'initialisation du processus, les étapes sont les suivantes :
- T1 : Transfert d'une puissance de charge entre la première bobine primaire BP_{N} et la bobine secondaire BPs.
- à l'étape T2, on teste si l'intensité du courant induit dans la bobine suivante BP_{N+1} est supérieure à l'intensité du courant mesuré sur la bobine BP_{N}. Ledit seuil de transition se calcule dans notre exemple d'application de façon adaptative mais en variante la valeur dudit seuil pourrait aussi être prédéterminée.

Si l'intensité du courant induit dans la bobine primaire suivante BP_{N+1} est supérieure audit seuil de transition alors l'étape suivante est l'étape T4 sinon l'étape suivante est l'étape T3.
- à l'étape T3, aucune bobine primaire proche fonctionnelle n'a détecté une intensité de courant induit supérieure audit seuil de transition, l'arrêt de l'émission de la bobine BP_{N} est conditionné par l'atteinte d'un seuil de fréquence de commande issu de la régulation, signifiant que la distance entre bobines primaire et secondaire est trop importante pour assurer un transfert de puissance à un rendement suffisant.
- à l'étape T4, on arrête l'alimentation de la bobine primaire courante BP_{N}, on alimente la bobine primaire suivante BP_{N+1} donnant lieu au transfert de puissance dans ladite bobine primaire BP_{N+1} et on met en court-circuit la bobine primaire immédiatement consécutive BP_{N+2}.

Le processus continue alors de la même façon que l'enchaînement des étapes T1 à T4.

Les mesures de l'intensité le dans les bobines primaires sont réalisées au moyen de capteurs d'intensité CAP au niveau des bobines primaires BP. Ce courant est filtré et transmis à l'unité électronique de pilotage CPU (unique dans notre exemple) qui en calcule sa valeur efficace et la mémorise de manière à suivre son évolution et la comparer aux différents seuils déjà mentionnés. L'intensité du courant efficace initialisant le transfert de puissance dans chaque bobine primaire BP est prédéterminée et vaut 15 à 20 ampères (courant similaire à celui de la bobine alimentée) dans notre exemple d'application mais cette valeur pourrait être calculée de façon adaptative. Les seuils ont tous été exprimés en valeur efficace mais la valeur crête aurait également pu être utilisée.

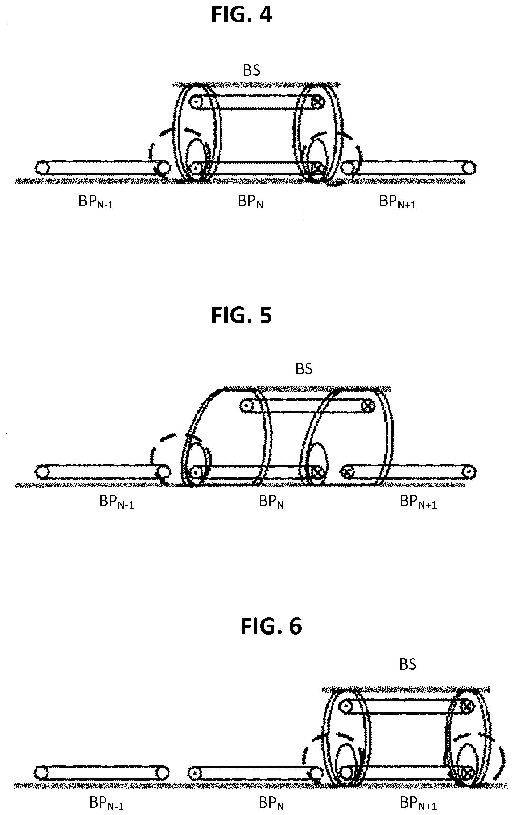

Les **figures 4, 5 et 6** illustrent du point de vue des couplages magnétiques les étapes T1 à T5 précédentes avec le déplacement du véhicule VEH.
- En premier lieu, la **figure 4** montre le transfert au moment où la bobine secondaire BS est en face de la bobine primaire BP_{N} : la grande majorité du flux est partagé entre ces 2 bobines et l'intensité du courant traversant la bobine suivante BP_{N+1} est quasi nulle car seules les fuites magnétiques issues de la bobine primaire BP_{N} induisent une tension dans la bobine suivante BP_{N+1} et dans la bobine précédente BP_{N-1}.
- Lorsque le véhicule VEH s'est déplacé, la bobine secondaire BS réceptrice est partiellement au-dessus de la bobine primaire BP_{N+1} selon le schéma de la **figure 5****.** Dans ce cas, le flux passe partiellement dans la bobine primaire BP_{N+1} en court-circuit créant un courant résonant qui va permettre de compenser la perte de couplage entre la bobine BP_{N} et la bobine secondaire BS et ainsi maintenir le rendement du transfert. En d'autres termes, le flux que génère BP_{N+1} magnétise le volume d'entrefer qui sépare la portion de BS au-dessus de BP_{N+1}. L'apparition d'un courant induit dans la bobine BP_{N+1} mise en court-circuit, mesuré par le capteur de courant nécessaire à la régulation, permet de détecter l'arrivée du véhicule VEH à charger au-dessus de la bobine BP_{N+1}.
- Une fois le véhicule suffisamment éloigné de la bobine primaire BP_{N}, la bobine primaire BP_{N+1} assure l'émission de puissance alors que la bobine précédente BP_{N} change d'état et ne transmet plus d'énergie comme représenté en **figure 6****.**
Une récurrence peut s'installer en répétant ce processus aux bobines suivantes.

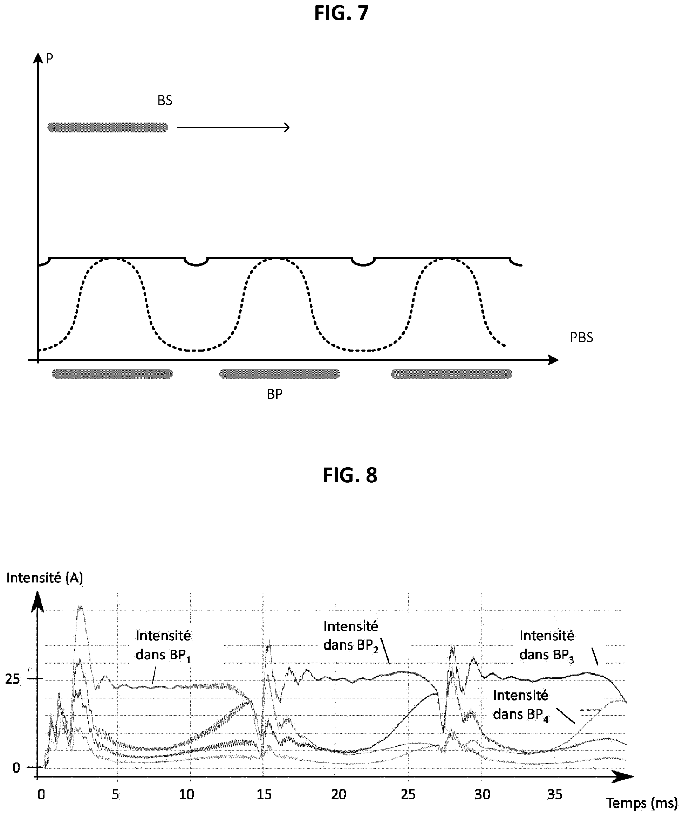

Le graphique de la **figure 7** présente la puissance P transmise au secondaire en fonction de la position PBS de la bobine secondaire en mouvement. Sont également représentées pour une meilleure clarté les bobines primaires BP situées au sol du tronçon de route équipé RTE et la bobine secondaire en mouvement BS. La courbe en pointillée est la puissance transmise au secondaire sans mise en court-circuit, c'est à dire que la détection se fait, comme décrit dans WO201201291A2, par envoi périodique d'un train d'impulsions à faible puissance par chaque bobine primaire BP et son analyse par ladite bobine primaire BP pour en déduire la présence ou l'absence d'une bobine secondaire BS pour la charge de ladite batterie BAT du véhicule VEH. La courbe en trait continu est la puissance P transmise au secondaire avec mise en court-circuit selon l'invention. Le fait d'avoir la prochaine bobine primaire suivante BP_{N+1} en court-circuit permet de compenser l'énergie réactive du volume d'air entre véhicule et bobines primaires BP grâce au courant qui est induit dans la bobine primaire BP_{N+1}. De fait, la puissance transmise est lissée et peut être maximale sur une plage de décalage entre bobine primaire BP_{N} alimentée et bobine secondaire BS allant jusqu'à +/- 50% sans détérioration notable du rendement. La détermination des différents seuils d'intensité, par exemple It, If, Icc sont ainsi obtenus par optimisation du lissage de la puissance transmise. Grâce à l'invention la puissance moyenne reçue par la bobine secondaire BS est continue et presque toujours égale à la puissance maximale que peut fournir une bobine primaire BP.

En **figure 8** les courbes sont l'image des courants efficaces dans quatre bobines primaires consécutives au sol en appliquant le procédé selon l'invention. Les bobines primaires et secondaires utilisées dans cet exemple d'application ont une longueur de 40 à 50 cm (standard compatible avec la charge statique) et la garde au sol du véhicule VEH mesure 10 à 15 cm.

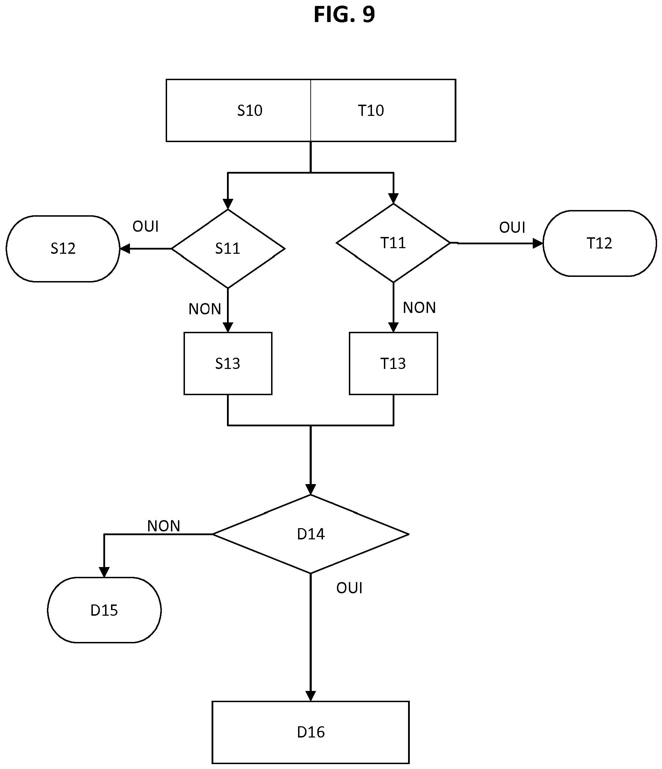

La **figure 9** expose l'organigramme des étapes du procédé de détection de perte et de reprise du transfert de puissance en cas de bobine primaire BP défaillante par exemple. L'invention se sert de l'étage de redressement RED embarqué à bord du véhicule VEH comme générateur de flux pour lui-même réenclencher le processus précédent en amorçant le démarrage d'une bobine primaire BP suivante fonctionnelle. Ce procédé comporte la détection de la perte anormale de transfert de puissance en cas de bobine primaire défaillante sur le tronçon de route RTE et la relance du transfert de puissance sur une bobine primaire fonctionnelle située en aval de la dernière bobine primaire BP ayant émis. La séquence commence par :
- l'étape T10 de confirmation de l'arrêt du transfert de puissance sur une bobine fonctionnelle BP_{N}. Cette étape résulte d'une étape d'absence de transfert de type T3 précédemment décrite ayant duré continûment pendant une durée prédéterminée d'environ 5 millisecondes. Ce choix de 5 millisecondes correspond au temps maximum que dure une transition normale entre deux bobines primaires BP consécutives auquel on ajoute une sécurité de 10% par exemple.
- une étape T11 vérifie si BP_{N} est la dernière bobine primaire BP du tronçon de route RTE afin de déterminer si l'arrêt est normal ou anormal. Cette étape est réalisée par le CPU global recevant les informations d'état de chaque onduleur OND.
- l'étape T12 en cas de réponse positive à la question de l'étape précédente T11 est une étape de terminaison clôt la charge car l'arrêt est dit normal.
- l'étape T13 en cas de réponse négative à la question de l'étape T11 est une étape de déclenchement de la mise en court-circuit des bobines primaires BP situées en aval de la dernière bobine primaire BP ayant émis (>N). Le choix du nombre de bobines primaires à mettre en court-circuit peut-être préférentiellement limité à 4 par exemple et ladite mise en court-circuit est exécutée pendant un temps prédéterminé d'environ 35 millisecondes. Néanmoins, dans un souci de simplification du processus, une alternative consiste à mettre toutes les bobines primaires BP, à l'exception de celle(s) en émission, en court-circuit indépendamment de leur émission antérieure. Ladite mise en court-circuit est alors soit exécutée pendant un temps prédéterminé d'environ 35 millisecondes soit déjà effectuée par une prédisposition établissant que l'état de repos des bobines primaires BP est l'état court-circuit. Parallèlement du côté de la bobine secondaire sur véhicule, une séquence se déclenche également sur la fin confirmée du transfert de puissance de l'étape T10 qui se traduit au niveau du véhicule par l'absence de flux induit traversant la bobine secondaire réceptrice pendant une durée continue supérieure à un seuil de temps prédéterminé d'environ 5 millisecondes. A l'étape de confirmation de l'arrêt du transfert de puissance T10 correspond une étape S10 du procédé de gestion de la charge implémenté dans le véhicule VEH, cette étape S10 étant suivie des étapes suivantes du procédé de gestion de la charge.
- une étape S11 déterminant si l'arrêt est normal (fin du tronçon équipé ou volonté de fin de charge du conducteur) ou anormal. Pour cela il est vérifié si la fin du tronçon de route RTE a été atteinte par moyen de détection du véhicule (GPS...), il est également vérifié qu'aucune requête d'arrêt de charge du conducteur par désactivation via une interface homme-machine n'a été émise. Ladite interface donne la possibilité au conducteur d'inhiber volontairement le procédé de transfert d'énergie par la mise en court-circuit de ladite bobine secondaire BS. Une fois le procédé ainsi inhibé par le conducteur, la bobine primaire le perçoit comme un éloignement soudain du véhicule se traduisant par une chute soudaine de la fréquence de résonance et arrête alors l'émission. En outre, les stratégies de terminaison de charge liées à la batterie BAT du véhicule VEH telles que décrites par exemple dans le document WO201201291A2 sont combinables avec l'invention. Ainsi, un arrêt confirmé du transfert de puissance dû à une fin de charge est aussi considéré comme un arrêt normal. Si dans cette étape l'arrêt est dit « normal », alors l'étape suivante est l'étape S12, sinon l'étape suivante est l'étape S13.

- l'étape S12 est la terminaison en cas de réponse positive à la question de l'étape précédente S11 clôturant la charge.
- l'étape S13 est le déclenchement de l'alimentation de la bobine secondaire BS avec pilotage par l'onduleur OND d'émission d'impulsions de courant d'intensité de 1 à 2 ampères pendant 1ms avec un rapport cyclique de 10 à 20% par exemple, ledit courant provenant de la batterie BAT. Ledit train d'impulsions envoyé comporte 500 à 1000 oscillations de courant, correspondant à une durée prédéterminée d'environ 15 millisecondes.

Une fois ces deux branches parallèles de conditions remplies, la séquence se poursuit par les étapes suivantes implémentées par le système selon l'invention :
- une étape D14 (image de l'étape E3) de détection d'un courant induit supérieur à un seuil d'amorçage prédéterminé détecté dans une bobine primaire en aval BP_{N+2} par exemple. Ledit courant induit est généré par une des impulsions dudit train émis par la bobine secondaire BS.
- une étape D15 de terminaison en cas de non détection de courant induit dans une bobine primaire BP pendant ledit train d'impulsions mettant fin au processus : clôturant la charge à l'issue dudit train d'impulsions.
- une étape D16 de relance de la charge par induction à la suite de la détection du signal induit dans la bobine primaire BP_{N+2} se traduisant par la réalimentation de ladite bobine primaire BP_{N} par un courant efficace de 20 ampères par exemple, créant alors un courant induit dans la bobine secondaire BS forçant alors l'étage de redressement RED en mode roue libre (comme dans l'étape E5), c'est-à-dire avec le courant passant par les seules diodes de commutations. Cette étape relance donc la charge en mettant la bobine primaire BP_{N+2} en émission, remettant de facto la bobine secondaire BS en réception et en mettant en court-circuit la bobine primaire encore suivante.

Le processus peut alors reprendre comme précédemment décrit à l'issue de l'étape T1 de la figure 3.

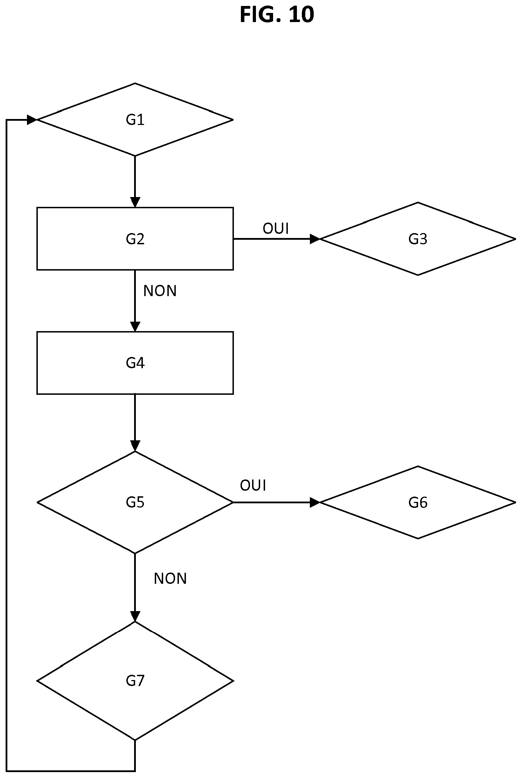

Enfin, la **figure 10** présente un organigramme des étapes du procédé de dégivrage selon l'invention. Ledit procédé de dégivrage consiste à dégivrer la route en créant de la chaleur dans les bobines primaires BP au sol du tronçon de route RTE en l'absence de tout véhicule au-dessus. En effet, en l'absence de tout véhicule en face de la bobine, il est possible de faire chauffer la bobine primaire BP enterrée, et par conduction thermique la chaussée dans le but de la dégivrer. Le circuit résonant de la bobine primaire BP au sol est piloté par son onduleur OND et ladite bobine primaire BP s'échauffe par effet joule produit par le courant qui la traverse. La séquence est la suivante :
- étape G1 de réception par une bobine primaire BP d'un ordre de dégivrage. Cet ordre peut par exemple provenir de l'unité électronique de pilotage CPU qui reçoit un signal de température mesurée, au moyen d'un capteur de température tel qu'une thermistance, et qui déclenche un ordre de dégivrage au-dessous d'un seuil de température prédéterminé.
- étape G2 de vérification de l'état d'émission de ladite bobine primaire BP, cet état est connu de l'unité électronique de pilotage CPU
- étape G3 de refus de dégivrage si la réponse à l'étape précédente G2 est OUI, à savoir si ladite bobine primaire BP est en émission. Le dégivrage est refusé pour ladite bobine primaire BP puisque son utilisation comme bobine émettrice signifie qu'elle est en cours de charge d'un véhicule VEH situé au-dessus.

- étape G4 d'évaluation d'impédance si la réponse à l'étape précédente G2 est NON, à savoir si ladite bobine primaire BP n'est pas en émission. Lors de cette étape l'onduleur OND, commandé par une unité électronique de pilotage CPU, pilote la valeur efficace du courant injecté (faible courant efficace de 1 à 2 ampères par exemple) dans la bobine primaire BP via une stratégie de pilotage de l'intensité le à une fréquence supérieure à la fréquence de résonance du circuit constitué de la bobine et de la capacité de compensation : ZVS pour « Zéro Voltage Switching » pendant 1 milliseconde environ. L'intérêt du mode ZVS est double, d'une part il est plus facilement réalisable que le strict déphasage nul et d'autre part les pertes au blocage sont très faibles grâce à l'évolution des composants tels que les transistors type MOSFETs ou IGBTs. En effet, l'autre mode concurrent correspondant à une fréquence de commutation inférieure à la fréquence de résonance est appelé mode ZCS, pour « Zero Current Switching », et présente des pertes à l'amorçage qui n'ont pas connu la même diminution des pertes car les diodes ont peu évolué. L'impédance de la bobine primaire BP et de la capacité de compensation associée est évaluée pendant cette étape.
- étape G5 de comparaison de ladite impédance à la courbe spécifique d'impédance au circuit à vide.
- étape G6 de refus de dégivrage si ledit seuil Zd est dépassé car l'augmentation de ladite impédance traduit l'approche d'un véhicule VEH.
- étape G7 d'échauffement de la chaussée si l'impédance demeure inférieure audit seuil Zd. Lors de cette étape l'onduleur OND est commandé par une unité électronique de pilotage CPU qui pilote la valeur efficace du courant injecté (fort courant efficace par exemple de 3 à 4 ampères) dans la bobine primaire BP via une stratégie de pilotage ZVS pendant 5 millisecondes environ.

Le choix de la stratégie de pilotage en ZVS présente deux avantages :
- être en permanence au-dessus de la fréquence de résonance du circuit, et puisque plus la fréquence est élevée pour un courant donné plus sont importantes les pertes par effet de peau, favoriser ainsi l'échauffement de la chaussée. Les puissances dissipées dans le sol sont alors de 200-300 watts.
- permettre des pertes minimum pour l'onduleur OND de par le blocage doux des diodes.

La séquence reboucle ensuite sur l'étape G1 tant que l'ordre de dégivrage est maintenu.

Les seuils décrits dans ce mode préféré de réalisation sont des intensités mais en variante des seuils de puissances sont également utilisables en les comparant à l'intensité le filtrée multipliée par la tension du circuit résonant primaire Ve habituellement mesurée.

Dans chaque boucle primaire le transfert de puissance utilise un procédé de « tracking », le « tracking » se définissant comme la recherche de la fréquence de résonance du circuit afin d'obtenir le meilleur transfert pour une position donnée. Ce « tracking » n'a pas été décrit ici car il n'est pas le sujet de l'invention néanmoins on peut préciser qu'il utilise le mode ZVS en pleine onde permettant ainsi un pilotage de la fréquence de commutation des transistors en adéquation avec la charge dynamique.

L'invention décrit les conditions d'alimentation et d'arrêt d'une bobine primaire BP au sol sans avoir de moyen de communication entre le véhicule VEH et les bobines primaires BP autre que le transfert d'un flux magnétique. Le procédé et le système de transfert de puissance de l'invention repose sur une bobine primaire BP mise en court-circuit et servant ainsi de capteur de position du véhicule VEH en mouvement. L'invention permet le lancement d'une séquence de transmission de puissance par détection d'un flux induit produit par le véhicule VEH dans une bobine primaire BP déclenchant la commutation de ladite bobine primaire BP qui avait été précédemment mise en court-circuit. Cette invention assure ensuite le maintien d'une puissance quasi constante dans la bobine secondaire BS en mouvement grâce à la mise en court-circuit de la bobine qui vient immédiatement après la bobine alimentée. La détection de bobine primaire hors-service et la relance de la charge sur une bobine primaire BP suivante est également prévue ainsi que la possibilité pour le conducteur de mettre fin à la charge par induction. Enfin, le procédé de dégivrage permet, après la confirmation de l'absence de véhicule au-dessus de la bobine primaire ayant reçu l'ordre de dégivrage, de réchauffer la chaussée en utilisant la bobine primaire.

## Revendications

1. Procédé de transfert de puissance d'un circuit primaire (CP), comportant un onduleur (OND) et un circuit résonant incluant une bobine primaire (BP_{N}), vers un circuit secondaire (CS) comportant une bobine secondaire (BS), destiné à la charge sans contact d'une batterie électrique (BAT) d'un véhicule automobile électrique ou hybride (VEH) en mouvement, une puissance électrique étant transférée par induction entre ladite bobine primaire (BP_{N}) émettrice disposée dans un tronçon de route (RTE), et ladite bobine secondaire (BS) réceptrice embarquée sur ledit véhicule (VEH) et connectée à ladite batterie (BAT), ladite bobine primaire (BP_{N}) appartenant à un réseau d'au moins deux bobines primaires (BP) successives disposées dans un tronçon de route (RTE), chaque bobine primaire (BP) étant reliée à l'onduleur (OND) associé du circuit résonnant l'incluant, et l'espacement entre deux bobines primaires (BP) étant inférieur à la demi-longueur d'une bobine primaire (BP), ledit procédé comportant des étapes de :
- (T1) transfert de puissance entre ladite bobine primaire (BP_{N}) et le véhicule (VEH),
- (T5) transfert de puissance entre la bobine primaire suivante (BP_{N+1}) et le véhicule (VEH),
**caractérisé en ce que** ledit procédé comporte en outre
- une étape de mise en court-circuit de la bobine primaire suivante (BP_{N+1}), au moyen de l'onduleur (OND) associé,
- une étape de détection de dépassement d'un seuil d'intensité de courant induit ou de puissance dans la bobine primaire (BP) suivante,
avant la transition entre ledit transfert de puissance incluant la bobine primaire (BP_{N}) et ledit transfert de puissance incluant la bobine primaire suivante (BP_{N+1}).

2. Procédé selon la revendication précédente **caractérisé en ce qu'**il comporte une étape d'initialisation, à l'arrivée détectée dudit véhicule (VEH) sur le tronçon de route (RTE), par alimentation de la première bobine primaire (BP) du tronçon de route (RTE).

3. Procédé selon la revendication 1 **caractérisé en ce que** le procédé comporte une séquence d'initialisation comportant des étapes de :
- (E0) mise en court-circuit de la première bobine primaire (BP) du tronçon de route (RTE),
- (E3) détection d'un flux induit traversant la première bobine primaire (BP) du tronçon de route (RTE) supérieur à un seuil prédéterminé, ledit flux provenant du circuit secondaire (CS),
- (E5) transfert de puissance par émission de ladite première bobine primaire (BP) du tronçon de route (RTE).

4. Procédé selon la revendication 1 **caractérisé en ce que** chaque bobine primaire (BP) initialise son transfert de puissance avec une intensité efficace de valeur prédéterminée.

5. Procédé selon l'une quelconque des revendications précédentes, **caractérisé en ce que** chaque bobine primaire (BP_{N}) initialise son transfert de puissance avec une valeur efficace de son intensité fonction de la dernière valeur efficace de l'intensité du courant d'alimentation de la bobine primaire précédente (BP_{N-1}).

6. Procédé selon l'une quelconque des revendications précédentes **caractérisé en ce que** la transition entre ledit transfert de puissance incluant la bobine primaire (BP_{N}) et ledit transfert de puissance incluant la bobine primaire suivante (BP_{N+1}) est activée par dépassement d'un seuil d'intensité de courant induit prédéterminé adaptatif dans la bobine primaire suivante (BP_{N+1}).

7. Procédé selon la revendication 6 **caractérisé en ce que** ledit seuil d'intensité de courant induit prédéterminé adaptatif est fonction de la valeur efficace de l'intensité du courant d'alimentation traversant la bobine primaire (BP_{N}).

8. Procédé selon l'une quelconque des revendications 1 à 5 **caractérisé en ce que** la transition entre ledit transfert de puissance incluant la bobine primaire (BP_{N}) et ledit transfert de puissance incluant la bobine primaire suivante (BP_{N+1}) est activée par dépassement d'un seuil de puissance prédéterminé adaptatif dans la bobine primaire suivante (BP_{N+1}).

9. Procédé selon l'une quelconque des revendications précédentes **caractérisé en ce que** la transition est suivie de l'arrêt d'alimentation de la bobine primaire (BP_{N}).

10. Procédé selon l'une quelconque des revendications précédentes **caractérisé en ce qu'**il comporte une étape (T10) d'arrêt dudit procédé de transfert de puissance, déclenchée par la détection d'une absence de flux induit dans une autre bobine primaire suivante (BP) pendant une durée continue supérieure à un seuil de temps prédéterminé.

11. Procédé selon la revendication précédente **caractérisé en ce que** le déclenchement de ladite étape d'arrêt sur une bobine primaire (BP) autre que la dernière du tronçon de route (RTE) active la mise en court-circuit de bobines primaires (BP) situées en aval de la dernière bobine primaire (BP) ayant émis.

12. Système de transfert de puissance comportant un système primaire (SYS) intégré à un tronçon de route (RTE), ledit système primaire (SYS) comportant :
- au moins deux bobines primaires (BP) successives avec un espacement entre deux bobines inférieur à la demi-longueur d'une bobine primaire (BP),
- au moins un onduleur (OND) pilotant l'intensité pour chacune desdites bobines primaires (BP), chaque bobine primaire (BP) étant reliée à un onduleur (OND) respectif,
- un bus d'alimentation continue (BAC) alimentant en tension ledit au moins un onduleur (OND),
- des moyens de mesure des intensités traversant lesdites bobines primaires (BP),
- une unité électronique de pilotage (CPU) commandant ledit au moins un onduleur (OND),
ledit système primaire (SYS) étant apte à transférer une puissance électrique par induction entre la première desdites bobines primaires (BP_{N}) et une bobine secondaire (BS) embarquée sur un véhicule automobile électrique ou hybride (VEH) en mouvement et connectée à la batterie (BAT) dudit véhicule (VEH), puis à transférer une puissance électrique par induction entre la bobine primaire suivante (BP_{N+1}) et ladite bobine secondaire (BS),
ledit système de transfert de puissance étant **caractérisé en ce qu'**il comporte en outre :
- des moyens aptes à mettre en court-circuit la bobine primaire suivante (BP_{N+1}) , lesdits moyens incluant l'onduleur (OND) respectif de ladite bobine primaire suivante (BP_{N+1}) ,
- des moyens de détection de dépassement d'un seuil d'intensité de courant induit ou de puissance dans la bobine primaire (BP) suivante,
avant la transition entre le transfert de puissance incluant la première desdites bobines primaires (BP_{N}) et le transfert de puissance incluant la bobine primaire suivante (BP_{N+1}).

13. Système selon la revendication précédente **caractérisé en ce que** le système comporte :
- un moyen de détection de l'arrivée dudit véhicule (VEH) sur le tronçon de route (RTE),
- un moyen d'initialisation du transfert de puissance comportant des moyens de pilotage du courant d'alimentation de la première bobine primaire (BP) du tronçon de route (RTE), activé par ledit moyen de détection.

14. Système selon la revendication 12 **caractérisé en ce qu'**il comporte des moyens d'initialisation comportant des moyens de :
- mise en court-circuit de la première bobine primaire (BP) dudit tronçon de route (RTE),
- détection d'un dépassement de seuil de courant du fait d'un flux induit traversant la première bobine primaire (BP) dudit tronçon de route (RTE), ledit flux provenant de la bobine secondaire (BS),
- pilotage en émission de ladite première bobine primaire (BP) du tronçon de route (RTE), lesdits moyens de pilotage étant activés par lesdits moyens de détection.

15. Système selon l'une quelconque des revendications 12 à 14 **caractérisé en ce qu'**il comporte des moyens aptes à :
- détecter un arrêt du transfert de puissance non requis par ledit système primaire (SYS),
- déclencher la mise en court-circuit de bobines primaires situées en aval de la dernière bobine primaire (BP) ayant émis.

16. Système selon l'une quelconque des revendications 12 à 15 **caractérisé en ce qu'**il comprend en outre des moyens de :
- réception d'un ordre de dégivrage émis par une unité électronique de pilotage (CPU),
- vérification de l'absence de transfert de puissance par ladite bobine primaire (BP),
- vérification de l'absence de véhicule (VEH) au-dessus de ladite bobine primaire (BP),
- injection d'un courant efficace de dégivrage dans ladite bobine primaire (BP).

17. Procédé de dégivrage d'un tronçon de route (RTE) dans lequel est intégré un système de transfert de puissance selon la revendication 16, utilisant ledit système et **caractérisé en ce qu'**il comprend des étapes de :
- (G1) réception d'un ordre de dégivrage émis par un moyen de pilotage d'une bobine primaire (BP),
- (G2) vérification de l'absence de transfert de puissance par ladite bobine primaire (BP),
- (G5) vérification de l'absence de véhicule (VEH) au-dessus de ladite bobine primaire (BP) par mesure d'une variation d'impédance de ladite bobine primaire (BP) inférieure à un seuil prédéterminé,
- (G7) dégivrage par injection de courant efficace dans ladite bobine primaire (BP).

18. Procédé de dégivrage d'un tronçon de route (RTE) selon la revendication précédente **caractérisé en ce que** l'alimentation de la bobine primaire (BP) par ladite injection de courant efficace se fait à fréquence élevée.

19. Procédé de gestion de la charge sans contact d'un véhicule (VEH) roulant sur un tronçon de route (RTE) équipé d'un système de transfert de puissance selon la revendication 14, utilisant ledit système et **caractérisé en ce qu'**il comprend une séquence d'initialisation comportant des étapes de :
- (E1) détection de l'arrivée dudit véhicule (VEH) sur ledit tronçon de route (RTE) équipé,
- (E2) activation en émission d'une bobine secondaire (BS) connectée à une batterie (BAT) du véhicule (VEH) pendant un temps prédéterminé ou jusqu'à ce qu'un flux soit induit dans ladite bobine secondaire (BS).

20. Procédé de gestion de la charge sans contact d'un véhicule (VEH) selon la revendication 19 **caractérisé en ce qu'**il comprend une séquence de reprise de charge comportant des étapes de :
- (S10) détection de l'arrêt d'un transfert de puissance effectué par ledit système primaire (SYS) dudit système de transfert de puissance, par l'absence prolongée de flux induit dans la bobine secondaire (BS) pendant une durée continue supérieure à un seuil de temps prédéterminé,
- (S11) vérification du caractère non requis dudit arrêt déterminé **en ce que** ledit arrêt ne résulte ni d'une volonté du conducteur du véhicule (VEH), ni d'une requête d'un système de contrôle de ladite batterie (BAT), ni d'une requête d'arrivée en fin dudit tronçon de route (RTE) équipé,
- (S13) activation en émission de ladite bobine secondaire (BS) pendant un temps prédéterminé ou jusqu'à ce qu'un flux soit de nouveau induit dans ladite bobine secondaire (BS).

## Patentansprüche

1. Verfahren zur Übertragung von Leistung von einem Primärkreis (CP), der einen Wechselrichter (OND) und einen Resonanzkreis, der eine Primärspule (BP_{N}) einschließt, umfasst, zu einem Sekundärkreis (CS), der eine Sekundärspule (BS) umfasst, das zum kontaktlosen Laden einer elektrischen Batterie (BAT) eines sich bewegenden elektrischen oder hybriden Kraftfahrzeugs (VEH) bestimmt ist, wobei eine elektrische Leistung durch Induktion zwischen der sendenden Primärspule (BP_{N}), die in einem Streckenabschnitt (RTE) angeordnet ist, und der empfangenden Sekundärspule (BS), die sich an Bord des Fahrzeugs (VEH) befindet und mit der Batterie (BAT) verbunden ist, übertragen wird, wobei die Primärspule (BP_{N}) zu einem Netzwerk aus mindestens zwei aufeinanderfolgenden Primärspulen (BP), die in einem Streckenabschnitt (RTE) angeordnet sind, gehört, wobei jede Primärspule (BP) mit dem zugehörigen Wechselrichter (OND) des Resonanzkreises, der sie einschließt, verbunden ist und der Abstand zwischen zwei Primärspulen (BP) weniger als die halbe Länge einer Primärspule (BP) beträgt, wobei das Verfahren folgende Schritte umfasst:
- (T1) Übertragen von Leistung zwischen der Primärspule (BP_{N}) und dem Fahrzeug (VEH),
- (T5) Übertragen von Leistung zwischen der nachfolgenden Primärspule (BP_{N+1}) und dem Fahrzeug (VEH), **dadurch gekennzeichnet, dass** das Verfahren ferner
- einen Schritt des Kurzschließens der nachfolgenden Primärspule (BP_{N+1}) mit Hilfe des zugehörigen Wechselrichters (OND),
- einen Schritt des Detektierens einer Überschreitung einer Schwelle einer induzierten Stromstärke oder Leistung in der nachfolgenden Primärspule (BP),
vor dem Übergang zwischen der Leistungsübertragung, die die Primärspule (BP_{N}) einschließt, und der Leistungsübertragung, die die nachfolgende Primärspule (BP_{N+1}) einschließt, umfasst.

2. Verfahren nach dem vorhergehenden Anspruch, **dadurch gekennzeichnet, dass** es einen Schritt des Initialisierens, bei detektierter Ankunft des Fahrzeugs (VEH) auf dem Streckenabschnitt (RTE), durch eine Versorgung der ersten Primärspule (BP) des Streckenabschnitts (RTE) umfasst.

3. Verfahren nach Anspruch 1, **dadurch gekennzeichnet, dass** das Verfahren eine Initialisierungssequenz umfasst, die folgende Schritte umfasst:
- (E0) Kurzschließen der ersten Primärspule (BP) des Streckenabschnitts (RTE),
- (E3) Detektieren eines induzierten Flusses, der durch die erste Primärspule (BP) des Streckenabschnitts (RTE) fließt und größer als eine vorbestimmte Schwelle ist, wobei der Fluss von dem Sekundärkreis (CS) stammt,
- (E5) Übertragen von Leistung durch ein Senden der ersten Primärspule (BP) des Streckenabschnitts (RTE).

4. Verfahren nach Anspruch 1, **dadurch gekennzeichnet, dass** jede Primärspule (BP) ihre Leistungsübertragung mit einer Effektivstärke mit einem vorbestimmten Wert initialisiert.

5. Verfahren nach einem beliebigen der vorhergehenden Ansprüche, **dadurch gekennzeichnet, dass** jede Primärspule (BP_{N}) ihre Leistungsübertragung mit einem Effektivwert ihrer Stärke initialisiert, der von dem letzten Effektivwert der Stärke des Versorgungsstroms der vorhergehenden Primärspule (BP_{N-1}) abhängt.

6. Verfahren nach einem beliebigen der vorhergehenden Ansprüche, **dadurch gekennzeichnet, dass** der Übergang zwischen der Leistungsübertragung, die die Primärspule (BP_{N}) einschließt, und der Leistungsübertragung, die die nachfolgende Primärspule (BP_{N+1}) einschließt, durch eine Überschreitung einer adaptiven vorbestimmten Schwelle einer induzierten Stromstärke in der nachfolgenden Primärspule (BP_{N+1}) aktiviert wird.

7. Verfahren nach Anspruch 6, **dadurch gekennzeichnet, dass** die adaptive vorbestimmte Schwelle einer induzierten Stromstärke von dem Effektivwert der Stärke des Versorgungsstroms, der durch die Primärspule (BP_{N}) fließt, abhängt.

8. Verfahren nach einem beliebigen der Ansprüche 1 bis 5, **dadurch gekennzeichnet, dass** der Übergang zwischen der Leistungsübertragung, die die Primärspule (BP_{N}) einschließt, und der Leistungsübertragung, die die nachfolgende Primärspule (BP_{N+1}) einschließt, durch eine Überschreitung einer adaptiven vorbestimmten Leistungsschwelle in der nachfolgenden Primärspule (BP_{N+1}) aktiviert wird.

9. Verfahren nach einem beliebigen der vorhergehenden Ansprüche, **dadurch gekennzeichnet, dass** auf den Übergang ein Versorgungsstopp der Primärspule (BP_{N}) folgt.

10. Verfahren nach einem beliebigen der vorhergehenden Ansprüche, **dadurch gekennzeichnet, dass** es einen Schritt (T10) des Stoppens des Leistungsübertragungsverfahrens umfasst, der durch die Detektion ausgelöst wird, dass in einer anderen nachfolgenden Primärspule (BP) über einen kontinuierlichen Zeitraum, der größer als eine vorbestimmte Zeitschwelle ist, kein induzierter Fluss vorhanden ist.

11. Verfahren nach dem vorhergehenden Anspruch, **dadurch gekennzeichnet, dass** das Auslösen des Schritts des Stoppens an einer Primärspule (BP), die nicht die letzte des Streckenabschnitts (RTE) ist, das Kurzschließen von Primärspulen (BP) aktiviert, die sich stromabwärts der letzten Primärspule (BP), die gesendet hat, befinden.

12. System zur Leistungsübertragung, das ein Primärsystem (SYS) umfasst, das in einen Streckenabschnitt (RTE) integriert ist, wobei das Primärsystem (SYS) Folgendes umfasst:
- mindestens zwei aufeinanderfolgende Primärspulen (BP) mit einem Abstand zwischen zwei Spulen, der weniger als die halbe Länge einer Primärspule (BP) beträgt,
- mindestens einen Wechselrichter (OND), der die Stärke für jede der Primärspulen (BP) steuert, wobei jede Primärspule (BP) mit einem jeweiligen Wechselrichter (OND) verbunden ist,
- einen Bus zur kontinuierlichen Versorgung (BAC), der den mindestens einen Wechselrichter (OND) mit Spannung versorgt,
- Mittel zum Messen der Stärken, die durch die Primärspulen (BP) fließen,
- eine elektronische Steuereinheit (CPU), die den mindestens einen Wechselrichter (OND) ansteuert,
wobei das Primärsystem (SYS) dazu angepasst ist, eine elektrische Leistung durch Induktion zwischen der ersten der Primärspulen (BP_{N}) und einer Sekundärspule (BS), die sich an Bord eines sich bewegenden elektrischen oder hybriden Kraftfahrzeugs (VEH) befindet und mit der Batterie (BAT) des Fahrzeugs (VEH) verbunden ist, zu übertragen und dann eine elektrische Leistung durch Induktion zwischen der nachfolgenden Primärspule (BP_{N+1}) und der Sekundärspule (BS) zu übertragen,
wobei das Leistungsübertragungssystem **dadurch gekennzeichnet ist, dass** es ferner Folgendes umfasst:
- Mittel, die dazu fähig sind, die nachfolgende Primärspule (BP_{N+1}) kurzzuschließen, wobei die Mittel den jeweiligen Wechselrichter (OND) der nachfolgenden Primärspule (BP_{N+1}) einschließen,
- Mittel zum Detektieren einer Überschreitung einer Schwelle einer induzierten Stromstärke oder Leistung in der nachfolgenden Primärspule (BP),
vor dem Übergang zwischen der Leistungsübertragung, die die erste der Primärspulen (BP_{N}) einschließt, und der Leistungsübertragung, die die nachfolgende Primärspule (BP_{N+1}) einschließt.

13. System nach dem vorhergehenden Anspruch, **dadurch gekennzeichnet, dass** das System Folgendes umfasst:
- ein Mittel zum Detektieren der Ankunft des Fahrzeugs (VEH) auf dem Streckenabschnitt (RTE),
- ein Mittel zum Initialisieren der Leistungsübertragung, das Mittel zum Steuern des Versorgungsstroms der ersten Primärspule (BP) des Streckenabschnitts (RTE) umfasst und durch das Detektionsmittel aktiviert wird.

14. System nach Anspruch 12, **dadurch gekennzeichnet, dass** es Initialisierungsmittel umfasst, die Mittel für Folgendes umfassen:
- Kurzschließen der ersten Primärspule (BP) des Streckenabschnitts (RTE),
- Detektieren einer Überschreitung einer Stromschwelle aufgrund eines induzierten Flusses, der durch die erste Primärspule (BP) des Streckenabschnitts (RTE) fließt, wobei der Fluss von der Sekundärspule (BS) stammt,
- Steuern der ersten Primärspule (BP) des Streckenabschnitts (RTE), sodass diese sendet, wobei die Steuermittel durch die Detektionsmittel aktiviert werden.

15. System nach einem beliebigen der Ansprüche 12 bis 14, **dadurch gekennzeichnet, dass** es Mittel umfasst, die zu Folgendem fähig sind:
- Detektieren eines Stopps der Leistungsübertragung, der nicht durch das Primärsystem (SYS) angefordert wurde,
- Auslösen des Kurzschließens von Primärspulen, die sich stromabwärts der letzten Primärspule (BP), die gesendet hat, befinden.

16. System nach einem beliebigen der Ansprüche 12 bis 15, **dadurch gekennzeichnet, dass** es ferner Mittel für Folgendes beinhaltet:
- Empfangen eines Enteisungsbefehls, der von einer elektronischen Steuereinheit (CPU) gesendet wird,
- Prüfen, dass keine Leistungsübertragung durch die Primärspule (BP) stattfindet,
- Prüfen, dass sich kein Fahrzeug (VEH) oberhalb der Primärspule (BP) befindet,
- Einspeisen eines Effektivstroms zur Enteisung in die Primärspule(BP).

17. Verfahren zur Enteisung eines Streckenabschnitts (RTE), in den ein Leistungsübertragungssystem nach Anspruch 16 integriert ist, unter Verwendung des Systems und **dadurch gekennzeichnet, dass** es folgende Schritte beinhaltet:
- (G1) Empfangen eines Enteisungsbefehls, der durch ein Steuermittel einer Primärspule (BP) gesendet wird,
- (G2) Prüfen, dass keine Leistungsübertragung durch die Primärspule (BP) stattfindet,
- (G5) Prüfen, dass sich kein Fahrzeug (VEH) oberhalb der Primärspule (BP) befindet, durch das Messen einer Impedanzänderung der Primärspule (BP), die kleiner als eine vorbestimmte Schwelle ist,
- (G7) Enteisen durch Einspeisen eines Effektivstroms in die Primärspule (BP).

18. Verfahren zur Enteisung eines Streckenabschnitts (RTE) nach dem vorhergehenden Anspruch, **dadurch gekennzeichnet, dass** die Versorgung der Primärspule (BP) durch das Einspeisen eines Effektivstroms mit hoher Frequenz erfolgt.

19. Verfahren zur Verwaltung des kontaktlosen Ladens eines Fahrzeugs (VEH), das auf einem Streckenabschnitt (RTE) fährt, der mit einem Leistungsübertragungssystem nach Anspruch 14 ausgerüstet ist, unter Verwendung des Systems und **dadurch gekennzeichnet, dass** es eine Initialisierungssequenz beinhaltet, die folgende Schritte umfasst:
- (E1) Detektieren der Ankunft des Fahrzeugs (VEH) auf dem ausgerüsteten Streckenabschnitt (RTE),
- (E2) Aktivieren einer Sekundärspule (BS), die mit einer Batterie (BAT) des Fahrzeugs (VEH) verbunden ist, sodass diese, über eine vorbestimmte Zeit oder bis ein Fluss in der Sekundärspule (BS) induziert wird, sendet.

20. Verfahren zur Verwaltung des kontaktlosen Ladens eines Fahrzeugs (VEH) nach Anspruch 19, **dadurch gekennzeichnet, dass** es eine Sequenz zur Wiederaufnahme des Ladens beinhaltet, das folgende Schritte umfasst:
- (S10) Detektieren des Stopps einer Leistungsübertragung, die durch das Primärsystem (SYS) des Leistungsübertragungssystems erfolgt, durch die längere Abwesenheit eines induzierten Flusses in der Sekundärspule (BS) über einen kontinuierlichen Zeitraum, der größer als eine vorbestimmte Zeitschwelle ist,
- (S11) Prüfen, dass der bestimmte Stopp nicht angefordert wurde, das heißt, dass der Stopp weder auf einen Willen des Fahrers des Fahrzeugs (VEH) noch auf eine Anforderung eines Kontrollsystems der Batterie (BAT) noch auf eine Anforderung zum Erreichen des Endes des ausgerüsteten Streckenabschnitts (RTE) zurückzuführen ist,
- (S13) Aktivieren der Sekundärspule (BS), sodass diese, über eine vorbestimmte Zeit oder bis ein Fluss erneut in der Sekundärspule (BS) induziert wird, sendet.

## Claims

1. Method for transferring power from a primary circuit (CP), comprising an inverter (OND) and a resonant circuit including a primary coil (BP_{N}), to a secondary circuit (CS) comprising a secondary coil (BS), intended to contactlessly charge an electrical battery (BAT) of an electric or hybrid motor vehicle (VEH) in motion, an electrical power being transferred between said transmitting primary coil (BP_{N}), which is arranged in a stretch of road (RTE), and said receiving secondary coil (BS), which is aboard said vehicle (VEH) and is connected to said battery (BAT), by induction, said primary coil (BP_{N}) being part of a network of at least two successive primary coils (BP) arranged in a stretch of road (RTE), each primary coil (BP) being connected to the inverter (OND) associated with the resonant circuit that includes it, and the spacing between two primary coils (BP) being less than half the length of one primary coil (BP), said method comprising steps of:
- (T1) transferring power between said primary coil (BPn) and the vehicle (VEH),
- (T5) transferring power between the next primary coil (BP_{N+1}) and the vehicle (VEH),
**characterized in that** said method moreover comprises
- a step of shorting the next primary coil (BPn+i) by means of the associated inverter (OND),
- a step of detecting when an induced current strength threshold or power threshold is exceeded in the next primary coil (BP),
before the transition between said power transfer involving the primary coil (BP_{N}) and said power transfer involving the next primary coil (BP_{N+1}).

2. Method according to the preceding claim, **characterized in that** it comprises an initialization step, when the arrival of said vehicle (VEH) on the stretch of road (RTE) is detected, as a result of power being supplied to the first primary coil (BP) of the stretch of road (RTE).

3. Method according to Claim 1, **characterized in that** the method comprises an initialization sequence comprising steps of:
- (E0) shorting the first primary coil (BP) of the stretch of road (RTE),
- (E3) detecting an induced flow passing through the first primary coil (BP) of the stretch of road (RTE) above a predetermined threshold, said flow coming from the secondary circuit (CS),
- (E5) transferring power by transmission from said first primary coil (BP) of the stretch of road (RTE).

4. Method according to Claim 1, **characterized in that** each primary coil (BP) initializes its power transfer with an rms current of predetermined value.

5. Method according to any one of the preceding claims, **characterized in that** each primary coil (BP_{N}) initializes its power transfer with an rms value of its current dependent on the last rms value of the strength of the supply current of the preceding primary coil (BP_{N-1}).

6. Method according to any one of the preceding claims, **characterized in that** the transition between said power transfer involving the primary coil (BP_{N}) and said power transfer involving the next primary coil (BP_{N+1}) is activated as a result of an adaptive predetermined induced current strength threshold being exceeded in the next primary coil (BP_{N+1}).

7. Method according to Claim 6, **characterized in that** said adaptive predetermined induced current strength threshold is dependent on the rms value of the strength of the supply current passing through the primary coil (BP_{N}).

8. Method according to any one of Claims 1 to 5, **characterized in that** the transition between said power transfer involving the primary coil (BP_{N}) and said power transfer involving the next primary coil (BP_{N+1}) is activated as a result of an adaptive predetermined power threshold being exceeded in the next primary coil (BP_{N+1}).

9. Method according to any one of the preceding claims, **characterized in that** the transition is followed by the supply of power to the primary coil (BP_{N}) being stopped.

10. Method according to any one of the preceding claims, **characterized in that** it comprises a step (T10) of stopping said power transfer method, triggered by the detection of an absence of induced flow in another next primary coil (BP) for a continuous period above a predetermined time threshold.

11. Method according to the preceding claim, **characterized in that** the triggering of said stopping step on a primary coil (BP) other than the last of the stretch of road (RTE) activates the shorting of primary coils (BP) situated downstream of the last primary coil (BP) to have transmitted.

12. Power transfer system comprising a primary system (SYS) integrated in a stretch of road (RTE), said primary system (SYS) comprising:
- at least two successive primary coils (BP) with a spacing between two coils less than half the length of one primary coil (BP),
- at least one inverter (OND) controlling the current for each of said primary coils (BP), each primary coil (BP) being connected to a respective inverter (OND),
- a DC supply bus (BAC) supplying voltage to said at least one inverter (OND),
- means for measuring the currents passing through said primary coils (BP),
- an electronic control unit (CPU) controlling said at least one inverter (OND),
said primary system (SYS) being capable of transferring an electrical power between the first of said primary coils (BP_{N}) and a secondary coil (BS), which is aboard an electric or hybrid motor vehicle (VEH) in motion and is connected to the battery (BAT) of said vehicle (VEH), by induction and then of transferring an electrical power between the next primary coil (BP_{N+1}) and said secondary coil (BS) by induction,
said power transfer system being **characterized in that** it moreover comprises:
- means capable of shorting the next primary coil (BP_{N+1}), said means including the respective inverter (OND) of said next primary coil (BP_{N+1}),
- means for detecting when an induced current strength threshold or power threshold is exceeded in the next primary coil (BP),
before the transition between the power transfer involving the first of said primary coils (BP_{N}) and the power transfer involving the next primary coil (BP_{N+1}).

13. System according to the preceding claim, **characterized in that** the system comprises:
- a means for detecting when said vehicle (VEH) arrives on the stretch of road (RTE),
- a means for initializing the power transfer comprising means for controlling the supply current of the first primary coil (BP) of the stretch of road (RTE), activated by said detection means.

14. System according to Claim 12, **characterized in that** it comprises initialization means comprising means for:
- shorting the first primary coil (BP) of said stretch of road (RTE),
- detecting when a current threshold is exceeded on account of an induced flow that passes through the first primary coil (BP) of said stretch of road (RTE), said flow coming from the secondary coil (BS),
- controlling transmissions by said first primary coil (BP) of the stretch of road (RTE), said control means being activated by said detection means.

15. System according to any one of Claims 12 to 14, **characterized in that** it comprises means capable of:
- detecting when the power transfer not required by said primary system (SYS) is stopped,
- triggering the shorting of primary coils situated downstream of the last primary coil (BP) to have transmitted.

16. System according to any one of Claims 12 to 15, **characterized in that** it moreover comprises means for:
- receiving a de-icing order transmitted by an electronic control unit (CPU),
- checking that there is no power transfer by said primary coil (BP),
- checking that there is no vehicle (VEH) above said primary coil (BP),
- injecting an rms de-icing current into said primary coil (BP).

17. Method for de-icing a stretch of road (RTE) in which is integrated a power transfer system according to Claim 16 using said system, **characterized in that** it comprises steps of:
- (G1) receiving a de-icing order transmitted by a control means of a primary coil (BP),
- (G2) checking that there is no power transfer by said primary coil (BP),
- (G5) checking that there is no vehicle (VEH) above said primary coil (BP) by measuring an impedance variation of said primary coil (BP) below a predetermined threshold,
- (G7) de-icing by injecting rms current into said primary coil (BP).

18. Method for de-icing a stretch of road (RTE) according to the preceding claim, **characterized in that** the supply of power to the primary coil (BP) by said injection of rms current takes place at high frequency.

19. Method for managing the contactless charging of a vehicle (VEH) moving on a stretch of road (RTE) equipped with a power transfer system according to Claim 14 using said system, **characterized in that** it comprises an initialization sequence comprising steps of:
- (E1) detecting when said vehicle (VEH) arrives on said equipped stretch of road (RTE),
- (E2) activating transmissions by a secondary coil (BS) connected to a battery (BAT) of the vehicle (VEH) for a predetermined time or until a flow is induced in said secondary coil (BS).

20. Method for managing the contactless charging of a vehicle (VEH) according to Claim 19, **characterized in that** it comprises a charging resumption sequence comprising steps of:
- (S10) detecting when a power transfer carried out by said primary system (SYS) of said power transfer system is stopped, as a result of the prolonged absence of flow induced in the secondary coil (BS) for a continuous period above a predetermined time threshold,
- (S11) checking the not-required nature of said determined stoppage **in that** said stoppage results neither from a wish by the driver of the vehicle (VEH), nor from a request by a control system of said battery (BAT), nor from a request to arrive at the end of said equipped stretch of road (RTE),
- (S13) activating transmissions by said secondary coil (BS) for a predetermined time or until a flow is again induced in said secondary coil (BS).
